Europäisches Patentamt

European Patent Office

Office européen des brevets

(11) Publication number: **0 428 014 A2**

# EUROPEAN PATENT APPLICATION

(21) Application number: **90120921.3**

(51) Int. Cl.⁵: **C05G 1/00**

(22) Date of filing: **31.10.90**

(30) Priority: **06.11.89 US 432528**

(43) Date of publication of application:
**22.05.91 Bulletin 91/21**

(84) Designated Contracting States:
**AT BE CH DE DK ES FR GB GR IT LI LU NL SE**

(71) Applicant: **RELAND INDUSTRIES, INC.**
**P.O. Box 27**
**Paragonah, Utah(US)**

(72) Inventor: **Robinson, Elmo C.**
**P.O. Box 27**
**Paragonah, Utah 84760(US)**

(74) Representative: **Patentanwälte Grünecker,**
**Kinkeldey, Stockmair & Partner**
**Maximilianstrasse 58**
**W-8000 München 22(DE)**

(54) Method and apparatus for producing organic based fertilizer in a batch process.

(57) The invention provides a method for making organic based fertilizer in slurry form, and including mixing with an organic material quantities of phosphatel potash, trace minerals and water if necessary. Acid is mixed with the organic and inorganic material mixture and the resulting slurry mixture is permitted to cure for an extended period of time to allow the acid to chemically break down the material of the mixture. Then ammonia is bubbled into the mixture at a controlled rate such that the ammonia can react chemically with mixture to produce the finished fertilizer product.

Fig. 1

EP 0 428 014 A2

## METHOD AND APPARATUS FOR PRODUCING ORGANIC BASED FERTILIZER IN A BATCH PROCESS

### FIELD OF THE INVENTION

This invention relates to fertilizers and more Particularly to methods and apparatus for producing organic based fertilizer.

### BACKGROUND PRIOR ART

Humic acids comprise various organic acids obtained from humate, a complex variable material resulting from partial decomposition over time of plant or animal matter and forming the organic portion of soil. The natural process of forming humate involves the biological breakdown of organic materials over extended periods of time to form organic colloides and humic acids. During this natural processl various available plant nutrients are attached to the humic acid molecules and absorbed into the organic colloides to form complex molecular clusters of humic acids and humic salts of plant nutrients. The resulting fertilizer is stable and efficient in providing nutrients to the plant and is substantially more stable than common chemical fertilizer forms, but the formation of naturally forming humic acid fertilizers takes long periods of time for natural production. Until approximately the turn of the century, waste organic materials were used extensively as a primary nitrogen source of fertilizers. Today, even though waste organic materials such as agriculture wastes, agroindustrial processing wastes, and solid and liquid municipal waste are available in great quantities, such materials represent a small fraction of the total fertilizer market with chemical fertilizers furnishing the majority of the fertilizer demand, primarily because no commercially viable method and apparatus have been developed for economically converting these waste organic materiaLs to useable form as fertilizer having a high nitrogen content and providing controlled release of nutrients to the soil. Combining treated organic waste with inorganic materials to form a useful fertilizer is described in applicant's U.S. Patent No. 4,743,287. Other prior art methods for making fertilizer are described in U.S. Patent No. 3,050,383 to Wilson; U.S. Patent No. 3,966,450 to O'Neil; U.S. Patent No. 3,929,446 to Trocino; and U.S. Patent No. 3,942,970 to O'Donnell. The method for making fertilizer described in applicant's U.S. Patent No. 4,743,287 includes the use of a pressure reactor vessel. This pressure reactor vessel can be expensive to manufacture and maintain operational and it is difficult to maintain pressure seals where the process material enters and exits the pressure vessel. In other methods for making a granular organic material based fertilizer, applicant has employed a process wherein a mixture of organic material and inorganics including phosphate, potash and trace minerals were placed in a mixer and a quantity of sulfuric acid was added to that mixture. A forty minute curing step followed the addition of acid. The cured generally granular mixture was then returned to the mixer wherein ammonia was injected in sufficient quantity to produce a fertilizer of the desired pH. This process proved commercially impractical because it resulted in the generation of large quantities of fumes and heat during the addition of ammonia to the mixture, resulting inefficient use of the ammonia and generation of volatile fumes.

### SUMMARY OF THE INVENTION

The method of the invention provides for mixing organic materials, minerals, and inorganic chemicals to form organic based humic acid fertilizers, and wherein the process of forming the fertilizer is accomplished in a relatively short period of time compared to the time otherwise required for the natural process of forming humic fertilizer and wherein the organic based fertilizer provides a balanced, slow release of nutrients which cannot be achieved with common chemically produced inorganic or chemical fertilizers. More particularly, the invention provides an improved and efficient method for making organic based fertilizer, the method of the invention including selecting at least one organic material and mixing with this organic material measured quantities of nitrogen, phosphate, potash, sulfur, trace minerals and water if necessary. Acid is mixed with the organic and inorganic material mixture and the resulting mixture is permitted to cure for an extended period of time to allow the acid to chemically break down the material of the mixture. Then ammonia is bubbled into the mixture at a controlled rate such that the ammonia can react chemically with the mixture to produce the finished fertilizer product. Quantities of the various ingredients are adjusted to provide a fertilizer that has a desired percentage make-up of the major fertilizer elements for a specific crop. In a preferred form of the invention the finished product is a slurry and the organic material comprises 1-25% dry solids based on the total weight of the finished product. Measured amounts of the inorganic materials are mixed with the organic materials and the moisture content is adjusted, if required, either by adding water to the mixture or by dewatering the organics to obtain a moisture content of from 50-99%. A sufficient quantity of acid, usually sulfuric and/or phosphoric acid, is then added to the organic and inorganic material mixture to obtain a drastic change in pH, usually to a level of approximately 0.5 to 1.0 to provide for chemical break down of the organic material. This acidic material is contained in a large tank or the like and allowed to cure for a sufficient period of time to allow the acid to react chemically with the organic material and inorganic materials. While the chemical reaction of the acid with the organic and inorganic material is not fully understood, it is believed that this chemical reaction results in the formation of humic acids and colloides. A quantity of base material, such as anhydrous ammonia, is then injected or bubbled into the bottom of the tank at a controlled rate where it can react chemically with the cured mixture to raise the pH of that material to a pH level of the desired level of the finished product. It is a primary object of the invention to provide a process for producing an organic based fertilizer having improved stability and efficiency by combining soluable salt-based fertilizers with an organic material. Another object of the invention is to provide a fertilizer manufactured by combining organic materials, inorganic materials and nutrients, and a nitrogen base whereby the resulting organic based fertilizer product will have a desirable chemical make-up, provides for controlled long term release of nutrients for plant growth and which product can be produced in a liquid slurry form. These and other objects and features of the pcocess of the invention will become more fully apparent from the following detailed description in which the method and apparatus for practicing the invention will be described in detail.

BRIEF DESCRIPTION OF THE DRAWINGS

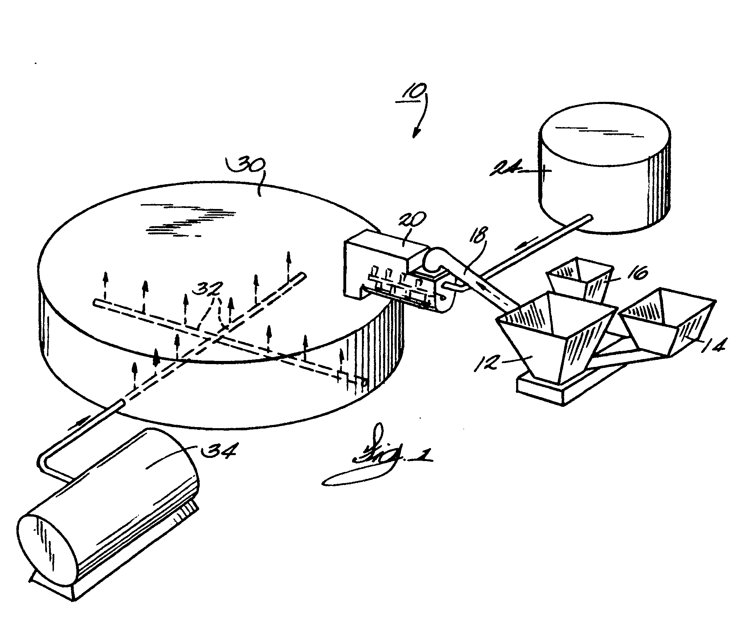

Fig. 1 is a perspective view of apparatus used in carrying out the method of the invention.

DETAILED DESCRIPTION OF THE PREFERRED EMBODIMENTS

Fig. 1 illustrates an apparatus for producing a humic fertilizer product in slurry form, the apparatus including a hopper 12 for containing organic material. The selected organic material could be solid or liquidl but in a preferred form of the invention, when producing a shurry product, the organic material will have a moisture content of 50 to 99%. For purposes of example, but not for limitation, the waste organic material in the hopper 12 can comprise livestock and poultry manure, sewage sludge, separated garbage, cotton-gin trash, fruit cannery waste, vegetable cannery waste, nut cannery waste, wood and paper pulp waste, spent mushroom compost, methane and alcohol solid wastes, lignite, leonardite, humate or coal. Sufficient quantities of organic material should be used that the finished shurry will have an organics content of 1-25% dry solids based on the weight of the finished product. The apparatus further includes a second hopper 14 adapted to contain inorganic materials such as rock phosphate, and a third hopper 16 is provided for containing potash and other inorganic materials or minerals. Selected quantities of material from the hoppers 12, 14 and 16 are transferred by a conveyor 18 into a mixer 20. While the mixer 20 could have other configurations, in one embodiment of the invention it can comprise a conventional paddle type mixer having an inlet end for receiving material from the hoppers 12, 14 and 16 and a discharge end. The material is conveyed to the mixer 20 from the hoppers 12, 14 and 16 in measured quantities, waste organic materials and inorganic materials being in amounts calculated to produce an end fertilizer that has a desired chemical make-up taking into account the nutrient content of the acid and base subsequently used in the process as will be described below. A measured amount of water may also be added to the mixture in the mixer 20 unless otherwise available from moisture already present in the materials. Acid such as sulfuric and/or phosphoric acid from an acid tank 24 is also injected or sprayed through a nozzle 26 into the mixer 20 and thoroughly mixed by the paddles in the mixer with the other materials to provide for mixing of the acid with the inorganic and organic material. In a preferred form of the invention sufficient amounts of acid are injected into the mixer to reduce the pH of the resultant mixture to 0.5 to 1.0 pH. This mixture is then discharged from the mixer into a large batch container or tank 30. The acidic mixture is allowed to cure in the tank 30 for an extended period of time. While the effect of this curing period is not fully understood, it is believed that during the curing period the acid continues to react chemically with the organic material to break down the organic material. In one form of the invention the mixture has been allowed to cure for a period of 12 hours in the tank 30. While shorter curing periods are possible, it is believed that more complete break down of the organics is achieved with longer curing times. The apparatus embodying the invention further includes injectors 32 at the bottom of the tank 30 and connected to a tank 34 of base material such as aqueous or anhydrous ammonia. The ammonia or other base materials is injected at a controlled rate through the injectors 32 at the bottom of the tank and mixes with the low pH material in the tank. In practice the ammonia becomes gaseous as it is injected into the bottom of the tank 30, and the ammonia rises through the slurry in the tank chemically reacting with the low pH mixture in the tank and raising the level of the pH of the material to the pH desired in the finished slurry fertilizer. In a preferred form of the invention, the ammonia is injected relatively slowly into the tank over an extended period, for example, one hour, to permit complete chemical reaction of the ammonia with the low pH mixture in the tank. In practice, the ammonia can be injected into the tank until such time as the odor of ammonia is noted, at which time there is no further chemical reaction in the slurry and the supply of the ammonia to the slurry is discontinued. While in the illustrated arrangement the acid is mixed with the organic material and inorganic material in the mixer 20 before being deposited in the tank 30, in other embodiments of the invention the acid, organic material and inorganics could be dumped into the tank 30 and mixed in the tank.

## PROCESS ILLUSTRATION

Following is an illustration of the process of the present invention using a selected organic material to produce a slurry fertilizer having the major element constituents by weight of 4-3-2 (N-P-K). The organic material used in forming the fertilizer is comprised of sewage sludge having 13% solids dry weight and the waste water sludge was 70. 1% of the weight of the finished slurry product. A quantity of sewage sludge was placed in a paddle type batch mixer holding a total quantity of approximately 10 cubic feet of material. While other mixers could be used, in this processI a Marion paddle type mixer, manufactured by Marion Mixers Inc., Marion, Iowa, was used. Rock phosphate in an amount of 3% by weight of the finished product and potash in an amount of 3.4% by weight of the finished product are also added to the organic material in the mixer. Phosphoric acid in an amount of 4.7% by weight of the finished product and sulfuric acid in an amount of 14. 1% by weight of the finished product were also added to the mixture in the mixer and the resultant mixture was mixed in the mixer for approximately two minutes to thoroughly mix the acid with the solid materials in the mixer. The contents of the batch mixer were then dumped into a 450 gallon tank. Additional amounts of sewage sludge, inorganics and acid were mixed in the batch type mixer repeatedly until the 450 gaɪɪon

curing tank was then allowed to cure for approximately 15 hours. Following the curing period, the slurry in the tank was stirred with a flash mixer to stir sediment at the bottom of the tank into the slurry. Two pipes connected to ammonia tanks containing anhydrous ammonia with 82% nitrogen were then extended into the curing tank and ammonia was bubbled into the bottom of the tank through the pipes. Approximately 225 lbs of ammonia was added to the mixture, i.e. approximately 4.7% by weight of the finished fertilizer product. The ammonia was bubbled into the tank for a period of approximately 45 minutes. Bubbling of the ammonia into the bottom of the tank and the chemical reaction of the ammonia in the acidic mixture agitated the slurry sufficiently to mix the ammonia into the tank. The resultant slurry comprised a finished humic acid based fertilizer.

## Claims

1. A method for producing an organic based slurry fertilizer containing a predetermined amount of an available inorganic material selected from the group including nitrogen, phosphate, and potash, and mixtures thereof comprising the steps of: (a) mixing with an organic material a sufficient amount of an inorganic material to provide said predetermined amount of said inorganic material in the fertilizer product, the mixture having a moisture content of about 50 to about 99% by weight based on the total weight of the mixture; (b) blending with the mixture a sufficient amount of an acid to obtain a reduction in pH of the mixture and to cause chemical breakdown of the mixture, the mixture comprising a slurry; (c) curing the blended slurry mixture in a container for a sufficient period of time to break down the organic material; and (d) injecting into the cured slurry mixture in the container a sufficient amount of a base material to raise the pH level of the slurry mixture to a predetermined pH level desired for the finished slurry fertilizer product. 2. A method as set forth in claim 1 wherein the amount of organic material is at least 1 - 25% dry solids based on the total weight of the fertilizer product. 3. A method as set forth in claim 1 wherein the blended slurry mixture is cured in the container for at least 4 hours. 4. A method as set forth in claim 1 wherein the blended slurry mixture is cured in the container for a period of at least 12 hours. 5. A method set forth in claim 1 wherein step (b) includes blending with the mixture a sufficient amount of acid to obtain a drastic reduction to pH to approximately 0.5 to 1. 0. 6. A method set forth in claim 1 wherein the final pH level of the finished fertilizer is within the range of 4 to 8. 7. A method set forth in claim 1 wherein step (a) includes adding water to the mixture of organic material and inorganic materials as necessary to produce a preferred moisture content of the mixture of about 55 to 75% of the total product weight. 8. A method set forth in claim 1 wherein steps (a), (b), (c) and (d) are carried out at atmospheric pressure. 9. A method as set forth in claim 1 wherein the base material in step (d) includes ammonia and wherein said ammonia is injected into the cured slurry mixture in the container over a period of time permitting chemical reaction of the ammonia with the cured slurry mixture as the ammonia is injected. 10. A method as set forth in claim 9 wherein the ammonia is injected into the cured slurry mixture over a period of at least 1/2 hour.